(19) Europäisches Patentamt
European Patent Office
Office européen des brevets

(11) **EP 2 908 412 B1**

(12) **FASCICULE DE BREVET EUROPEEN**

(45) Date de publication et mention
de la délivrance du brevet:
**18.03.2020 Bulletin 2020/12**

(51) Int Cl.:
***H02K 15/00*** *(2006.01)*     *H02K 15/03* *(2006.01)*
***H02K 21/16*** *(2006.01)*

(21) Numéro de dépôt: **15155163.7**

(22) Date de dépôt: **16.02.2015**

(54) **Actionneur électromecanique comprenant un moteur électrique, installation comprenant un tel actionneur, gamme d'actionneurs et procédé de fabrication associé**

Elektromechanisches Stellglied, das einen Elektromotor umfasst, Anlage, die ein solches Stellglied umfasst, Auswahlpalette an Stellgliedern und entsprechendes Herstellungsverfahren

Electromechanical actuator comprising an electric motor, installation comprising such an actuator, range of actuators and related manufacturing method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2014 FR 1451245**

(43) Date de publication de la demande:
**19.08.2015 Bulletin 2015/34**

(73) Titulaire: **SOMFY ACTIVITES SA**
**74300 Cluses (FR)**

(72) Inventeurs:
• **Tollance, Thierry**
**74930 PERS-JUSSY (FR)**

• **Cavarec, Pierre-Emmanuel**
**74130 MONT SAXONNEX (FR)**

(74) Mandataire: **Lavoix**
**62, rue de Bonnel**
**69448 Lyon Cedex 03 (FR)**

(56) Documents cités:
EP-A1- 0 895 337     JP-A- 2007 174 790
US-A1- 2006 273 684     US-A1- 2009 127 960
US-A1- 2011 148 239     US-A1- 2012 280 587
US-B1- 6 531 794

EP 2 908 412 B1

**Description**

La présente invention concerne un actionneur électromécanique comprenant un moteur avec un stator de moteur pourvu d'un profil adapté à coopérer avec au moins deux rotors et une installation domotique de fermeture ou de protection solaire comprenant un tel actionneur.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire tel qu'un volet, une porte, une grille, un store, ou tout autre matériel équivalent, appelé par la suite écran.

Les écrans équipant les bâtiments présentent des dimensions variées et le choix des matériaux utilisés se répercute considérablement sur la masse et l'inertie des éléments mobiles et, par conséquent, sur le couple nécessaire à la manœuvre de ceux-ci.

Les fabricants d'actionneurs permettant la manœuvre automatique de tels écrans sont généralement confrontés à la nécessité de proposer une gamme d'actionneurs présentant des caractéristiques de couple différentes, des dimensions ou des alimentations différentes, afin d'être en adéquation avec les caractéristiques des écrans ou des installations comprenant ces écrans.

L'invention concerne en particulier les actionneurs dits tubulaires utilisés dans les installations domotiques. Les moteurs généralement utilisés dans ce type d'actionneurs sont des moteurs asynchrones, qu'il est possible d'alimenter directement à partir du secteur alternatif. D'autres moteurs utilisés sont des moteurs à courant continu, avec balais et collecteurs, qui sont alimentés à partir du réseau alternatif par le biais d'un convertisseur alternatif continu ou directement à partir d'un dispositif de stockage d'énergie, tels qu'une batterie. Alternativement, des moteurs électriques sans balais à commutation électronique sont régulièrement utilisés dans d'autres applications, telles que des pompes, des ventilateurs ou des outillages électriques.

On connaît déjà des actionneurs comprenant un moteur. Le moteur comprend un rotor et un stator positionné de manière coaxiale autour d'un axe de rotation. Le rotor comprend un corps de rotor muni d'éléments magnétiques entourés par le stator. Les éléments magnétiques constituent des paires de pôles. Le stator est formé par un noyau de stator comprenant des éléments polaires répartis sur la périphérie du stator.

Les actionneurs tubulaires présentent généralement un carter allongé pour être enfilés dans un tube d'enroulement sur lequel l'écran s'enroule afin de libérer un accès, tel que par exemple une porte de passage ou une fenêtre. Les moteurs compris dans de tels actionneurs électriques sont donc conçus pour présenter un diamètre restreint par rapport à leur longueur.

Pour augmenter le couple produit par l'actionneur, il est connu de prévoir un diamètre d'actionneur plus important. Le moteur peut ainsi présenter un couple en sortie plus important, qui va de paire avec l'augmentation du diamètre d'enroulement de l'écran.

Pour augmenter le couple produit par l'actionneur, il peut également être prévu une longueur d'actionneur plus importante. Le moteur peut ainsi présenter un couple en sortie plus important, qui peut éventuellement aller de pair avec l'augmentation de la longueur d'enroulement de l'écran.

Dans ce domaine des moteurs et actionneurs électriques, il est donc connu d'utiliser, suivant le couple à délivrer, des moteurs de construction similaire mais dont les diamètres sont différents.

Cependant, ces actionneurs présentent l'inconvénient, suivant le couple à délivrer, de ne pas comprendre d'éléments constituant le moteur électrique ayant une construction commune d'un actionneur à un autre, tels que le stator et le rotor.

Par conséquent, il en résulte des coûts élevés de développement et d'industrialisation pour le fabricant d'actionneurs, puisque chaque moteur nécessite une conception et un outil industriel spécifiques, renchérissant ainsi le prix unitaire des pièces utilisées, c'est-à-dire des rotors et des stators et plus généralement des moteurs et des actionneurs.

En outre, il est connu que suivant le type de moteur électrique désiré, c'est-à-dire un moteur synchrone ou asynchrone ou à courant continu, les composants utilisés pour leur fabrication, notamment les stators et rotors utilisés, sont différents.

Par ailleurs, le changement des éléments magnétiques du rotor d'un moteur électrique nécessite de modifier la construction du rotor, du stator et des éléments polaires de sorte à maintenir le comportement électromagnétique du moteur.

US-A-2009/0127960 divulgue un moteur électrique dont le rotor comprend un aimant permanent anisotropique et cylindrique qui coopère avec des dents appartenant à un noyau de stator, sans qu'un rapport entre la largeur d'ouverture polaire angulaire des dents et la largeur angulaire d'éléments magnétiques du rotor ne soit considéré comme significatif, en termes de fonctionnement du moteur. Il en va de même pour le moteur connu de US-A-2006/0273684.

Par ailleurs, US-B-6 531 794 et JP-A-2007 174790 divulguent des procédés de fabrication de moteurs électriques avec des caractéristiques différentes, sans identifier de fonction particulière pour la relation entre une largeur d'ouverture polaire angulaire de parties d'un stator et la largeur angulaire d'éléments magnétiques d'un rotor.

US-A-2011/0148239 divulgue un moteur électrique à courant continu sans balais à commutation électronique. Le moteur comprend un rotor et un stator positionnés de manière coaxiale autour d'un axe de rotation. Le rotor comprend un corps de rotor muni d'éléments magnétiques entourés par le stator. Les éléments magnétiques sont disposés sur la circonférence extérieure du corps du rotor. Les éléments magnétiques entourent le corps du rotor et constituent un aimant permanent, ainsi que des paires de pôles. Le stator est formé par un noyau de stator comprenant des éléments polaires répartis sur la périphérie du stator, avec des bobinages positionnés autour des éléments polaires. Le stator définit un espace interne cylindrique à section circulaire, dans lequel le rotor est positionné et à l'intérieur duquel le rotor peut être en rotation. Le nombre d'éléments polaires du stator est de deux par élément magnétique du rotor. Une seule configuration du moteur est envisageable sur cette base.

La présente invention a pour but de résoudre les inconvénients précités et de proposer un actionneur électromécanique permettant d'uniformiser la construction des composants entre plusieurs références d'actionneurs comprenant chacun un moteur électrique délivrant un couple spécifique, tout en minimisant les coûts de fabrication des moteurs de toute une gamme d'actionneurs.

A cet effet, la présente invention vise, selon un premier aspect, un actionneur électromécanique selon la revendication 1.

Ainsi, un actionneur comprenant un moteur électrique pourvu d'un stator où les éléments polaires présentent une largeur d'ouverture polaire angulaire inférieure à la largeur angulaire des éléments magnétiques d'un premier rotor est apte à coopérer avec ce premier rotor de sorte à délivrer une première valeur de couple. Le stator est apte également à coopérer avec un deuxième rotor, de sorte à délivrer une deuxième valeur de couple, en particulier une deuxième valeur de couple supérieure à la première valeur de couple lorsque la largeur angulaire des éléments magnétiques du deuxième rotor est inférieure à la largeur angulaire des éléments magnétiques du premier rotor.

De cette manière, un actionneur comprenant un moteur électrique pourvu d'un stator ayant des éléments polaires d'une dimension inférieure à la largeur angulaire des éléments magnétiques d'un premier rotor, présente un profil de stator apte à coopérer avec plusieurs rotors, de sorte qu'un fabricant puisse produire au moins deux moteurs électriques différents comprenant un stator ayant un profil identique, et où chaque moteur électrique délivre un couple différent.

Par conséquent, une telle construction d'un moteur électrique d'actionneur permet de réduire les coûts de développement et d'industrialisation des actionneurs, en utilisant une conception et un outil industriel communs, et de diminuer le coût de fabrication des actionneurs d'une gamme comprenant respectivement un stator de construction commune.

Avantageusement, le stator présente un profil commun à usages multiples et une disposition des éléments polaires configurée pour coopérer avec différents types de rotor, le profil de stator correspondant à la section du stator orthogonale à l'axe de rotation du stator.

Selon une caractéristique préférée de l'invention, le profil du stator est configuré pour coopérer au moins avec le premier rotor comprenant un premier nombre de paires de pôles et avec un deuxième rotor comprenant un deuxième nombre de paires de pôles, où le premier nombre de paires de pôles du premier rotor est de deux et le deuxième nombre de paires de pôles du deuxième rotor est de quatre, et où la largeur d'ouverture polaire angulaire des éléments polaires est configurée pour coopérer avec le premier rotor et le deuxième rotor.

Ainsi, le stator présente un profil à usages multiples, et ce profil de stator permet de produire au moins deux moteurs électriques, où chaque moteur électrique permet de délivrer une valeur de couple spécifique, au moyen d'une unique disposition des éléments polaires permettant de garantir un fonctionnement satisfaisant de chacun des moteurs électriques différenciés par le rotor associé au stator ayant un profil commun à usages multiples.

Selon un deuxième aspect, l'invention concerne une installation domotique de fermeture ou de protection solaire qui comprend un écran enroulable sur un tube d'enroulement entraîné en rotation par un actionneur électromécanique tel que mentionné ci-dessus.

D'autres particularités et avantages de l'invention apparaîtront encore dans la description ci-après.

Aux dessins annexés, donnés à titre d'exemples non limitatifs :

- la figure 1 est une vue schématique en coupe d'une installation domotique conforme à un mode de réalisation de l'invention ;
- la figure 2 est une vue schématique en perspective de l'installation domotique de la figure 1 ;
- la figure 3 est une représentation schématique d'un actionneur de l'installation des figures 1 et 2, cet actionneur comprenant un moteur électrique de type à courant continu sans balais à commutation électronique et étant conforme à un mode de réalisation de l'invention ;
- la figure 4 est une coupe axiale du moteur électrique de l'actionneur de la figure 3 ;
- la figure 5 est une coupe selon la ligne V-V à la figure 4 ; et

- la figure 6 est une coupe analogue à la figure 5 d'un deuxième moteur électrique de type à courant continu sans balais à commutation électronique d'un deuxième actionneur, ce deuxième moteur comprenant un deuxième rotor.

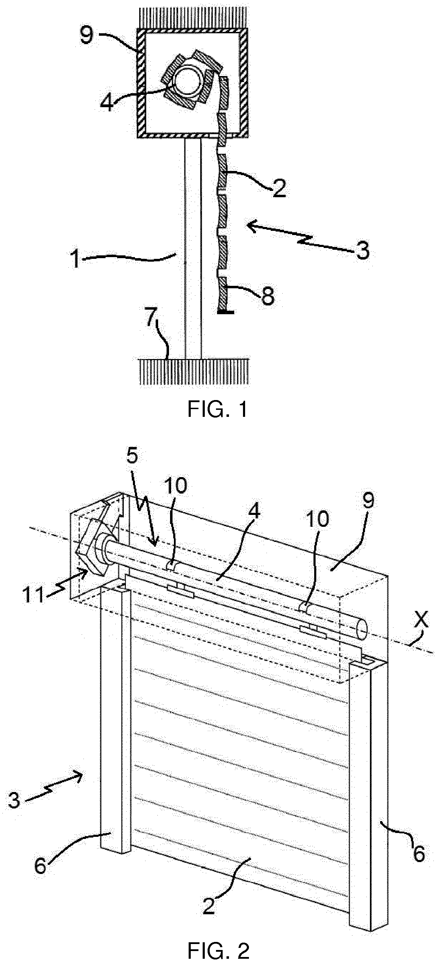

On va décrire tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. Bien entendu, la présente invention s'applique à tous les types de dispositif d'occultation.

On va décrire, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

De manière connue, un volet roulant 3 comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du volet roulant 3, opposée à la lame d'extrémité, est reliée au tube d'enroulement 4 au moyen d'au moins une articulation 10.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

Le dispositif d'entraînement motorisé 5 est commandé par une unité de commande non représentée. L'unité de commande peut être par exemple une unité de commande locale, où l'unité de commande locale peut être reliée en liaison filaire ou non filaire avec une unité de commande centrale. L'unité de commande centrale pilote l'unité de commande locale, ainsi que d'autres unités de commande locales similaires et réparties dans le bâtiment.

L'unité de commande centrale peut être en communication avec une station météorologique déportée à l'extérieur du bâtiment, incluant notamment un ou plusieurs capteurs pouvant être configurés à déterminer par exemple une température, une luminosité, ou encore une vitesse de vent.

Une télécommande, non représentée et pourvue d'un clavier de commande, qui comprend des moyens de sélection et d'affichage, permet en outre à un utilisateur d'intervenir sur l'unité de commande locale et/ou l'unité de commande centrale.

Le dispositif d'entraînement motorisé 5 et l'unité de commande locale sont de préférence configurés pour exécuter les commandes de déroulement ou d'enroulement de l'écran 2 du dispositif d'occultation 3, pouvant être acquises notamment par la télécommande.

Le dispositif d'entraînement motorisé 5 comprend un actionneur électromécanique 11, en particulier de type tubulaire, permettant de mettre en rotation le tube d'enroulement 4 de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

L'actionneur électromécanique 11 comprend un moteur électrique, un support de couple, et en outre notamment un dispositif de réduction à engrenages et un arbre de sortie.

L'actionneur électromécanique 11 comprend également un carter 31, préférentiellement de forme cylindrique.

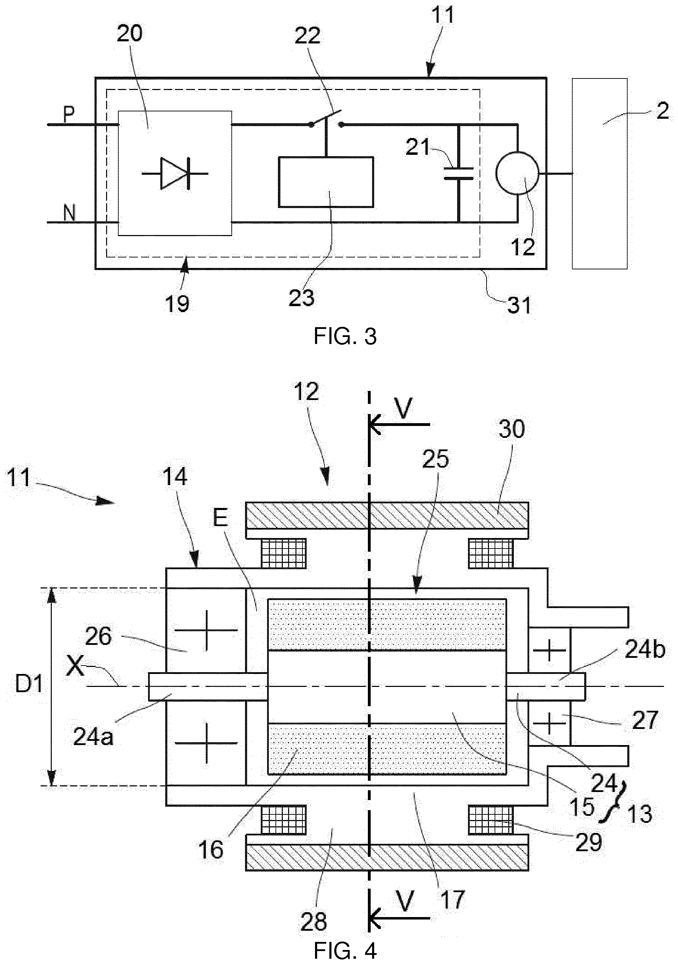

On va décrire à présent, en référence aux figures 3 à 5, un actionneur électromécanique conforme à l'invention.

A la figure 3, un actionneur 11 est représenté, cet actionneur faisant partie d'une gamme d'actionneurs. Les actionneurs 11 de la gamme sont alimentés en énergie électrique par le réseau d'alimentation électrique du secteur représenté par les fils de phase P et de neutre N. Ils permettent de déplacer l'écran 2 d'un dispositif d'occultation 3.

L'écran 2 mobile du dispositif d'occultation 3 est un écran de fermeture, d'occultation et/ou de protection solaire, s'enroulant sur le tube d'enroulement 4 dont le diamètre intérieur est sensiblement équivalent au diamètre externe de l'actionneur 11, de sorte que l'actionneur 11 puisse être inséré dans le tube d'enroulement 4 lors de l'assemblage du dispositif d'occultation 3.

Dans un autre mode de réalisation, l'actionneur 11 est destiné à être placé dans un rail profilé en U.

L'actionneur 11 comprend un moteur électrique 12. Le moteur 12 comprend un rotor 13 et un stator 14 positionnés de manière coaxiale autour d'un axe de rotation X.

Le rotor 13 comprend un corps de rotor 15 muni d'éléments magnétiques 16 entourés par le stator 14. Les éléments magnétiques 16 constituent des paires de pôles.

Les éléments magnétiques 16 sont disposés sur la circonférence extérieure du corps de rotor 15. Les éléments magnétiques 16 du rotor 13 constituent un aimant permanent. Ainsi, l'aimant permanent formé par les éléments magnétiques 16 entoure le corps du rotor 15. L'aimant permanent est séparé du stator 14 par un entrefer 25, radial par rapport à l'axe de rotation X.

Les éléments magnétiques 16 séparés constituant l'aimant permanent peuvent être rapportés sur la circonférence extérieure du corps de rotor 15 par collage, surmoulage ou toute autre technique connue.

Le stator 14 est formé par un noyau de stator 17 comprenant des éléments polaires 28 répartis sur la périphérie du stator 14, préférentiellement sur la périphérie extérieure du stator 14.

Le corps de rotor 15 est relié solidairement en rotation à un arbre de rotor 24. L'arbre de rotor 24 est centré sur l'axe de rotation X et dépasse de part et d'autre du corps de rotor 15. Ainsi, l'arbre de rotor 24 comprend une première et une deuxième extrémités 24a, 24b en saillie par rapport au corps de rotor 15.

Le moteur électrique 12 de la gamme d'actionneurs 11 est de type à courant continu sans balais à commutation électronique.

Chaque actionneur 11 de la gamme comprend un convertisseur alternatif continu 19. Le convertisseur alternatif continu 19 a une même structure électronique pour tous les actionneurs 11 de la gamme, le dimensionnement de certains composants étant différent d'un actionneur 11 à l'autre.

Dans un mode de réalisation, le convertisseur alternatif continu 19 est du type à découpage, selon la technique de modulation de largeur d'impulsion ou PWM (acronyme de « pulse width modulation »).

Dans un autre mode de réalisation, le convertisseur alternatif continu 19 est du type à transformateur et redresseur.

Le convertisseur alternatif continu 19 comprend un dispositif de redressement 20 de la tension du secteur, un condensateur 21, un transistor 22 et un circuit de commande 23, qui sont adaptés à la plage de puissance pouvant être délivrée par le moteur 12.

Pour chaque actionneur 11 de la gamme, la tension de secteur est redressée par le dispositif de redressement 20 et est utilisée pour charger le condensateur 21 disposé entre les bornes de sortie du convertisseur alternatif continu 19. La charge du condensateur 21 est commandée par le transistor 22, lui-même piloté par le circuit de commande 23.

Avantageusement, le corps de rotor 15 est formé à partir d'un empilage de tôle.

Dans un autre mode de réalisation, le corps de rotor 15 est réalisé par un arbre massif.

Le stator 14 définit un espace interne E cylindrique à section circulaire dans lequel le rotor 13, y compris notamment les éléments 16, est positionné et à l'intérieur duquel le rotor 13 est en rotation lorsque le moteur 12 fonctionne.

Le diamètre D1 de l'espace cylindrique E est tel que cet espace E reçoit le rotor 13 ainsi que les éléments magnétiques 16. La partie magnétique ou magnétisée du rotor 13 se trouvant à l'intérieur de l'espace cylindrique E interne au stator 14, le rotor 13 est qualifié de rotor interne.

L'espace cylindrique E reçoit également un premier palier 26 et un deuxième palier 27 de support en rotation de l'arbre de rotor 24. Ainsi, l'arbre de rotor 24 est monté en rotation au niveau de ses deux extrémités 24a et 24b par l'intermédiaire des deux paliers 26, 27.

Ici, la première extrémité 24a de l'arbre de rotor 24 est en contact avec le premier palier 26, tandis que la deuxième extrémité 24b de l'arbre de rotor 24 est en contact avec le deuxième palier 27.

Dans un mode de réalisation, au moins l'un des paliers 26, 27 est un roulement à billes.

Les premier et deuxième paliers 26, 27 sont ainsi positionnés de part et d'autre du corps de rotor 15 suivant l'axe de rotation X.

Dans un autre mode de réalisation, le moteur 12 comprend un seul palier supportant l'arbre de rotor 24.

Un noyau central est ici formé par le noyau de stator 17 appartenant au stator 14. Le noyau de stator 17 est en matériau magnétisable et plus spécifiquement en matériau ferromagnétique. Il est généralement formé par un empilage de tôles et muni de garnitures isolantes.

Le noyau de stator 17 comprend des éléments polaires 28, répartis sur la périphérie extérieure du stator 14.

Les éléments polaires 28 du noyau 17 sont en saillie vers l'extérieur du moteur électrique 12.

Des bobinages 29 sont positionnés autour des éléments polaires 28 du stator 14.

Plus précisément, chaque élément polaire 28 est entouré par un bobinage 29 qui lui est propre. Les bobinages 29 sont reliés de sorte que lorsqu'ils sont parcourus par un courant, ils produisent un champ magnétique tournant qui entraîne en rotation le rotor 13. Les bobinages 29 sont isolés du noyau de stator 17.

Le stator 14 comprend, sur sa circonférence extérieure, une culasse 30. La culasse 30 entoure le stator 14, c'est-à-dire le noyau central 17, qui est propre à la recevoir, et est centrée sur l'axe de rotation X. Cette culasse 30 permet la circulation du flux magnétique.

On définit la largeur d'ouverture polaire angulaire d'un élément polaire 28 du stator 14 comme l'angle au sommet d'un secteur angulaire centré sur l'axe de rotation X et délimité par deux droites passant respectivement par les deux extrémités d'une partie de cet élément qui définit l'entrefer 25, cet angle étant défini dans un plan radial à l'axe X et contenant cet élément polaire 28. Cette largeur d'ouverture polaire angulaire est parfois dénommée « épanouissement polaire ».

On définit la largeur angulaire $\alpha$ d'un élément magnétique 16 du rotor 13 comme l'angle au sommet d'un secteur angulaire d'aire minimale, centré sur l'axe de rotation X en coupe radiale du moteur 12 et qui inclut cet élément magnétique 16.

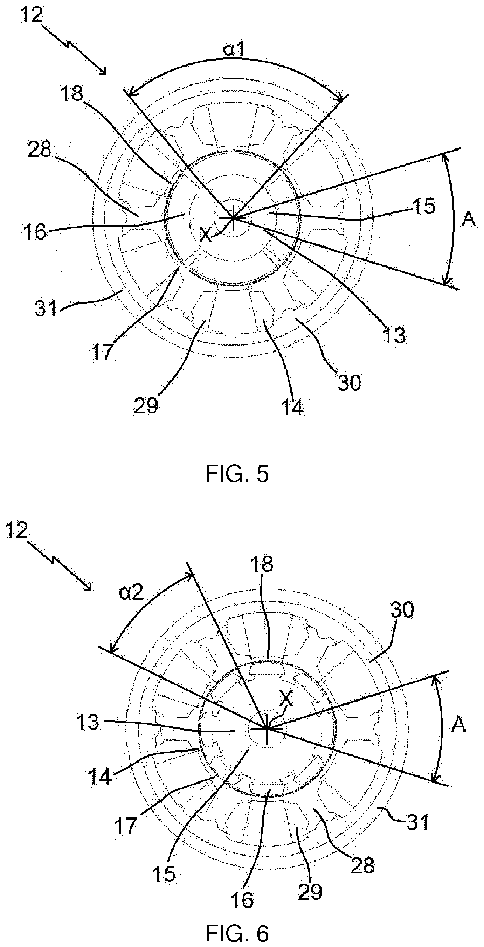

Comme illustré à la figure 5, les éléments polaires 28 présentent une largeur d'ouverture polaire angulaire A inférieure à la largeur angulaire $\alpha 1$ des éléments magnétiques 16 du premier rotor 13 qui appartient au moteur 12.

Ainsi, un actionneur 11 comprenant un moteur électrique 12 pourvu d'un stator 14 dont les éléments polaires 28 présentent une largeur d'ouverture polaire angulaire A inférieure à la largeur angulaire $\alpha 1$ des éléments magnétiques 16 d'un premier rotor 13 est apte à coopérer avec au moins avec un premier rotor 13 de sorte à délivrer une première valeur de couple.

Comme visible à la figure 6, ce stator 14 est également apte à coopérer avec un deuxième rotor 13, de sorte à délivrer une deuxième valeur de couple, alors que la première valeur de couple est inférieure à la deuxième valeur de couple et que la largeur angulaire $\alpha 1$ des éléments magnétiques 16 du premier rotor 13 est supérieure à la largeur angulaire $\alpha 2$ des éléments magnétiques 16 du deuxième rotor 13.

De cette manière, un actionneur 11 comprenant un moteur électrique 12 pourvu d'un stator 14 ayant des éléments polaires 28 d'une largeur d'ouverture polaire angulaire A inférieure à la largeur angulaire $\alpha 1$ des éléments magnétiques d'un premier rotor, présente un profil de stator 14 apte à coopérer avec une pluralité de rotors 13, de sorte qu'un fabricant puisse produire au moins deux moteurs électriques 12 différents comprenant un stator 14 ayant un profil identique, et où chaque moteur électrique 12 délivre un couple différent.

Par conséquent, une telle construction d'un moteur électrique 12 d'actionneur 11 permet de réduire les coûts de développement et d'industrialisation des actionneurs 11, en utilisant une conception et un outil industriel communs, et de diminuer le coût de fabrication des actionneurs 11 d'une gamme comprenant respectivement un stator 14 de construction commune.

Préférentiellement, la largeur d'ouverture polaire angulaire A des éléments polaires 28 est au moins deux fois plus petite que la largeur angulaire $\alpha 1$ des éléments magnétiques 16 du premier rotor 13. A titre d'exemple nullement limitatif, tel qu'illustré à la figure 5, la largeur d'ouverture polaire angulaire A des éléments polaires 28 est de l'ordre de 24° et la largeur angulaire $\alpha 1$ des éléments magnétiques 16 du premier rotor 13 est de l'ordre de 85°.

En outre, les éléments polaires 28 présentent une largeur d'ouverture polaire angulaire A sensiblement égale à la largeur angulaire $\alpha 2$ des éléments magnétiques 16 du deuxième rotor 13.

A titre d'exemple nullement limitatif, et comme illustré à la figure 6, la largeur d'ouverture polaire angulaire A des éléments polaires 28 est de l'ordre de 24° et la largeur angulaire $\alpha 2$ des éléments magnétiques 16 du premier rotor 13 est de l'ordre de 22°.

Dans un mode de réalisation, les éléments polaires 28 présentent une largeur d'ouverture polaire angulaire A définie par la relation suivante :

$$A < \frac{360°}{4 \times p1},$$

où p1 correspond au nombre de paires de pôles du premier rotor 13 du moteur électrique 12.

Ici, et tel qu'illustré à la figure 5, le nombre de paires de pôles du premier rotor 13 est de deux.

Dans le mode de réalisation tel qu'illustré aux figures 5 et 6, la largeur d'ouverture polaire angulaire A des éléments polaires 28 est comprise dans une plage s'étendant entre 20° et 40°, et le nombre d'éléments polaires 28 est de six.

Préférentiellement, la largeur d'ouverture polaire angulaire A des éléments polaires 28 est de l'ordre de 30°.

Avantageusement, le stator 14 présente un profil commun à usages multiples et une disposition des éléments polaires 28 configurée pour coopérer avec différents types de rotor 13. Ainsi, un actionneur 11 comprenant un moteur électrique 12 pourvu d'un stator 14, où le stator 14 présente un profil commun à usages multiples, est apte à coopérer avec au moins avec un premier rotor 13, de sorte à délivrer une première valeur de couple, et avec un deuxième rotor 13, de sorte à délivrer une deuxième valeur de couple, en particulier où la première valeur de couple est inférieure à la deuxième valeur de couple.

En outre, le noyau de stator 17 comprend des connecteurs 18 de court-circuit magnétique reliant deux éléments polaires 28 entre eux. Les courts-circuits magnétiques 18 du noyau de stator 17 correspondent à des liaisons mécaniques entre deux éléments polaires 28. Les courts-circuits magnétiques 18 du noyau de stator 17 canalisent une partie du flux magnétique généré par le moteur électrique 12 à l'intérieur du noyau de stator 17. Ainsi, les courts-circuits magnétiques 18 du noyau de stator 17 limitent le flux magnétique traversant les bobinages 29 positionnés autour des éléments polaires 28.

Préférentiellement, le profil du stator 14 est configuré pour coopérer au moins avec le premier rotor 13 comprenant un premier nombre de paires de pôles et avec un deuxième rotor 13 comprenant un deuxième nombre de paires de pôles, où le deuxième nombre de paires de pôles est différent du premier nombre de paires de pôles et où la largeur d'ouverture polaire angulaire A des éléments polaires 28 est configurée pour coopérer avec le premier rotor 13 et le deuxième rotor 13.

Ainsi, le stator 14 présente un profil commun à usages multiples, et ce profil de stator 14 permet de produire une gamme d'au moins deux moteurs électriques 12, où chaque moteur électrique 12 permet de délivrer une valeur de couple spécifique, au moyen d'une unique disposition des éléments polaires 28 permettant de garantir un fonctionnement satisfaisant de chacun des moteurs électriques 12 différenciés par le rotor 13 associé au stator 14 ayant un profil commun à usages multiples.

Le profil du stator 14 du moteur électrique 12 correspond à la section, autrement dit à la forme géométrique, du stator 14 définie par un plan de coupe V-V orthogonal à l'axe de rotation X du stator 14, comme ceux des figures 5 et 6.

Un stator 14 de moteur électrique 12 ayant un profil commun à une gamme d'actionneurs 11 peut présenter une longueur de stator 14 différente selon les moteurs. La longueur du stator 14 n'est nullement limitative. Le stator 14 peut ainsi être de longueur identique ou différente, pour chacun des actionneurs 11 d'une gamme.

Ici, le premier rotor 13 et le deuxième rotor 13 sont des rotors internes, c'est-à-dire des rotors 13 disposés à l'intérieur du stator 14 ayant un profil commun à usages multiples.

Dans ce mode de réalisation, le premier rotor 13 et le deuxième rotor 13 sont des rotors non bobinés.

En particulier, les bobinages 29 sont positionnés autour des éléments polaires 28 du stator 14 ayant un profil commun à usages multiples.

Un stator 14 de moteur électrique 12 ayant un profil commun à une gamme d'actionneurs 11 peut présenter des bobinages 29 ayant un nombre de spires différent pour chaque actionneur. Ici, le nombre de spires des bobinages 29 n'est nullement limitatif. Les bobinages 29 peuvent ainsi comprendre un nombre de spires, identique ou différent pour chacun des actionneurs 11 d'une gamme.

Dans un mode de réalisation particulier, le stator 14 du moteur 12 est un stator commun à usages multiples, le stator 14 étant configuré pour coopérer au moins avec un premier rotor 13 de sorte à délivrer une première valeur de couple et avec un deuxième rotor 13 de sorte à délivrer une deuxième valeur de couple, où la première valeur de couple est inférieure à la deuxième valeur de couple.

Ainsi, un actionneur 11 comprend un moteur électrique 12 pourvu d'un stator 14 commun à usages multiples et configuré pour coopérer d'une part avec un premier rotor 13 de sorte à délivrer une première valeur de couple et d'autre part avec un deuxième rotor 13 de sorte à délivrer une deuxième valeur de couple.

De cette manière, un premier et un deuxième actionneurs 11 comprennent respectivement un moteur électrique 12 pourvu d'un même stator 14 de sorte qu'un fabricant puisse produire au moins deux moteurs électriques 12 différents comprenant un stator 14 identique, et où chaque moteur électrique 12 délivre un couple différent.

Par conséquent, un tel moteur électrique 12 d'actionneur 11 permet de réduire les coûts de fabrication des actionneurs 11 et de diminuer le nombre de références de moteurs 12 et d'actionneurs 11 pour le fabricant.

Dans un tel cas, les bobinages 29 positionnés autour des éléments polaires 28 du stator 14 peuvent être identiques pour une gamme d'actionneurs 11.

En outre, la longueur du stator 14 est identique pour une gamme d'actionneurs 11.

Avantageusement, au moins une partie du corps de rotor 15 du premier rotor 13 et au moins une partie du corps de rotor 15 du deuxième rotor 13 sont réalisés dans un matériau différent.

Ainsi, le changement de matière pour le corps de rotor 15 des premier et deuxième rotors 13 permet de modifier la valeur de couple délivrée par un moteur électrique 12, de sorte à réduire le coût des différentes références d'actionneurs 11 en utilisant un stator 14 ayant un profil commun à usages multiples.

De cette manière, le changement de matière pour le corps de rotor 15 des premier et deuxième rotors 13 peut permettre d'optimiser le coût d'un moteur électrique 12 en utilisant une matière plus ou moins onéreuse permettant d'obtenir une valeur de couple souhaitée pour une référence d'actionneur 11.

En outre, le changement de matière pour le corps de rotor 15 des premier et deuxième types de rotors 13 peut permettre d'approvisionner un fabricant d'actionneurs dans le cas où l'une des matières est en rupture.

En pratique, le corps de rotor 15 du premier rotor 13 comprend des éléments magnétiques 16 en ferrite, et le corps de rotor 15 du deuxième rotor 13 comprend des éléments magnétiques 16 en néodyme fer bore.

Ainsi, un premier actionneur 11, tel qu'illustré à la figure 5, comprenant un premier moteur électrique 12, où le premier moteur électrique 12 comprend un premier stator 14 ayant un profil commun à usages multiples et un premier rotor 13, et où le corps de rotor 15 du premier rotor 13 comprend des éléments magnétiques 16 en ferrite, délivre un faible couple. Et un deuxième actionneur 11, tel qu'illustré à la figure 6, comprenant un deuxième moteur électrique 12, où le deuxième moteur électrique 12 comprend un deuxième stator 14 ayant le profil commun à usages multiples et un deuxième rotor 13, et où le corps de rotor 15 du deuxième rotor 13 comprend des éléments magnétiques 16 en néodyme fer bore, délivre un fort couple.

De cette manière, une gamme d'actionneurs 11 comprenant des moteurs électriques 12 pourvus respectivement d'un stator 14 ayant un profil commun à usages multiples permet de proposer différentes valeurs de couples pour chacun des actionneurs 11 tout en minimisant le coût d'obtention de ceux-ci.

En outre, le deuxième actionneur 11 peut être de longueur identique au premier actionneur 11 et peut délivrer un couple plus élevé, et éventuellement atteindre un meilleur rendement.

Le stator 14 ayant un profil commun à usages multiples comprend une disposition des éléments polaires 28 configurée pour coopérer avec le premier rotor 13 et avec le deuxième rotor 13.

Ainsi, le stator 14 ayant un profil commun à usages multiples permet de produire au moins deux moteurs électriques 12, où chaque moteur électrique 12 est différencié par le couple délivré, au moyen d'une unique disposition des éléments polaires 28 permettant de garantir un fonctionnement satisfaisant de chacun des moteurs électriques 12 différenciés par le rotor 13 associé à ce stator 14.

En outre, les éléments polaires 28 du stator 14 ayant un profil commun à usages multiples sont dimensionnés de sorte à garantir un fonctionnement satisfaisant pour l'ensemble des moteurs 12 de la gamme utilisant le même profil de stator 14.

Le dimensionnement des éléments polaires 28 du stator 14 ayant un profil commun à usages multiples consiste à définir la largeur de l'ouverture polaire angulaire A de chaque élément polaire 28 à proximité de l'entrefer 25. Ce dimensionnement des éléments polaires 28 du stator 14 ayant un profil commun à usages multiples consiste également à définir le nombre d'éléments polaires 28.

Dans un mode de réalisation, au moins un paramètre relatif aux éléments magnétiques 16 du premier rotor 13 et du deuxième rotor 13 est différent.

Ainsi, au moins un paramètre relatif aux éléments magnétiques 16 de chacun des rotors 13 est adapté en fonction du moteur électrique 12, de sorte à garantir un fonctionnement satisfaisant pour l'ensemble des moteurs 12 de la gamme utilisant le même profil de stator 14.

Cet au moins un paramètre peut être notamment le matériau des éléments magnétiques 16 de chacun des rotors 13, le nombre d'éléments magnétiques 16 de chacun des rotors 13, la taille des éléments magnétiques 16 de chacun des rotors 13 ou le mode d'assemblage des éléments magnétiques 16 avec le corps de rotor 15 de chacun des rotors 13.

Avantageusement, le nombre de paires de pôles du premier rotor 13 est inférieur au nombre de paires de pôles du deuxième rotor 13. Ainsi, le nombre de paires de pôles de chacun des rotors 13 est adapté en fonction du moteur électrique 12, de sorte à garantir un fonctionnement satisfaisant pour l'ensemble des moteurs 12 de la gamme utilisant un stator 14 ayant un profil commun à usages multiples.

En outre, le nombre de paires de pôles de chacun des rotors 13 est adapté en fonction de la matière des éléments magnétiques 16. De cette manière, dans le cas où les éléments magnétiques 16 sont puissants en raison de leur matière, en particulier les éléments magnétiques 16 en néodyme fer bore par rapport aux éléments magnétiques 16 en ferrite, le nombre de paires de pôles du rotor 13 est augmenté de sorte à utiliser le stator 14 ayant un profil commun à usages multiples, sans avoir à réaliser de modifications de ce profil.

Avantageusement, la taille des éléments magnétiques 16 du premier rotor 13 est supérieure à la taille des éléments magnétiques 16 du deuxième rotor 13. Ainsi, dans le cas où les éléments magnétiques 16 sont puissants, notamment en raison de leur matière, en particulier les éléments magnétiques 16 en néodyme fer bore par rapport aux éléments magnétiques 16 en ferrite, la dimension des éléments magnétiques 16 est réduite, de sorte à utiliser le stator 14 ayant le profil commun à usages multiples, sans avoir à réaliser de modifications de ce profil.

Avantageusement, le nombre de paires de pôles du rotor 13 est défini de sorte à garantir la génération d'un flux magnétique par le moteur électrique 12 permettant de saturer les courts-circuits magnétiques 18 du noyau de stator 17.

Dans un mode de réalisation, deux moteurs électriques 12 d'actionneurs 11 appartenant à une gamme comprenant un stator 14 ayant un profil commun à usages multiples sont définis par les relations suivantes :

$$\frac{Br2}{(p2+1)} < \frac{Br1}{p1} < \frac{Br2}{p2} \qquad \text{(relation 1)}$$

où Br1 correspond au champ magnétique des éléments magnétiques 16 d'un premier rotor 13 d'un premier moteur électrique 12, Br2 correspond au champ magnétique des éléments magnétiques 16 d'un deuxième rotor 13 d'un deuxième moteur électrique 12, p1 au nombre de paires de pôles du premier rotor 13 du premier moteur électrique 12, et p2 au nombre de paires de pôles du deuxième rotor 13 du deuxième moteur électrique 12 ; et

$$A < \frac{360°}{2 \times p2} \qquad \text{(relation 2)}$$

où A correspond à la largeur de l'ouverture angulaire polaire.

La relation 1 permet de garantir un fonctionnement satisfaisant pour l'ensemble des moteurs 12 de la gamme utilisant un stator 14 ayant un profil commun à usages multiples, en particulier de maintenir une densité de flux magnétique convenable, par l'utilisation d'un nombre de paires de pôles entier pour les premier et deuxième rotors 13.

La relation 2 permet de déterminer une largeur d'ouverture polaire angulaire A inférieure à la largeur angulaire $\alpha1$, $\alpha2$ la plus étroite des éléments magnétiques 16 des premier et deuxième rotors 13.

A titre d'exemple nullement limitatif, et tel qu'illustré aux figures 5 et 6, la gamme de moteurs électriques 12 pouvant être mise en œuvre avec un stator 14 ayant un profil commun à usages multiples peut comporter un premier moteur électrique 12 comprenant un premier rotor 13 pourvu de quatre éléments magnétiques 16 en ferrite, par conséquent de deux paires de pôles, et un deuxième moteur électrique 12 comprenant un deuxième rotor 13 pourvu de huit éléments magnétiques 16 en néodyme fer bore, par conséquent de quatre paires de pôles. Le champ magnétique des éléments magnétiques 16 du premier rotor 13 du premier moteur électrique 12 est de l'ordre de 0,5 Tesla. Le champ magnétique des éléments magnétiques 16 du deuxième rotor 13 du deuxième moteur électrique 12 est de l'ordre de 1 Tesla.

Ici et tel qu'illustré aux figures 5 et 6, le stator 14 ayant un profil commun à usages multiples coopérant avec les premier et deuxième rotors 13 comprend un nombre d'éléments polaires 28 égal à six.

Dans cet exemple, la largeur d'ouverture polaire angulaire A optimale pour le premier rotor 13 pourvu de quatre éléments magnétiques 16 en ferrite est comprise dans une plage entre 30° et 55°, et préférentiellement de l'ordre de 50°. La largeur d'ouverture polaire angulaire A optimale pour le deuxième rotor 13 pourvu de huit éléments magnétiques 16 en néodyme fer bore est comprise dans une plage entre 20° et 30°, et préférentiellement de l'ordre de 25°.

De ces plages optimales de la largeur d'ouverture polaire angulaire A respectivement pour les premier et deuxième rotors 13, la plage de fonctionnement admissible de la largeur d'ouverture polaire angulaire A pour un stator 14 ayant un profil commun à usage multiples avec les premier et deuxième rotors 13 est comprise entre 20° et 40°.

Le choix d'une largeur d'ouverture polaire angulaire A des éléments polaires 28 lors de la définition du stator 14 ayant un profil commun à usages multiples inférieure à 40°, en particulier de l'ordre de 24°, engendre un fonctionnement relatif, autrement dit sous-optimal, pour le premier rotor 13 ayant quatre éléments magnétiques 16 en ferrite.

Une telle largeur d'ouverture polaire angulaire A engendre ainsi une perte d'une partie du flux magnétique générée par le circuit magnétique du premier moteur électrique 12 comprenant le premier rotor 13 pourvu de quatre éléments magnétiques 16 en ferrite. Toutefois, une telle plage de fonctionnement admissible de la largeur d'ouverture polaire angulaire A garantit la compatibilité du stator 14 ayant un profil commun à usages multiples avec les premier et deuxième rotors 13 ayant respectivement des éléments magnétiques 16 en ferrite et en néodyme fer bore.

Par ailleurs, le choix d'une largeur d'ouverture polaire angulaire A des éléments polaires 28 lors de la définition du stator 14 ayant un profil commun à usages multiples de l'ordre de 25° permet de garantir un fonctionnement optimal pour le deuxième rotor 13 ayant huit éléments magnétiques 16 en néodyme fer bore.

Et une largeur d'ouverture polaire angulaire A des éléments polaires 28 de l'ordre de 45° ne peut être retenue lors de la définition du stator 14 ayant un profil commun à usages multiples puisque le deuxième rotor 13 pourvu de huit éléments magnétiques 16 en néodyme fer bore serait non fonctionnel si une telle valeur était retenue.

La présente invention s'applique ainsi à une gamme d'au moins deux actionneurs 11 comprenant :

- un premier actionneur 11, le premier actionneur 11 comprenant un premier moteur électrique 12, le premier moteur électrique 12 comprenant un premier rotor 13 et un premier stator 14 positionnés de manière coaxiale autour d'un axe de rotation X, le premier rotor 13 comprenant un premier corps de rotor 15 muni d'éléments magnétiques 16 entourés par le premier stator 14, le premier stator 14 étant formé par un noyau de stator 17 comprenant des éléments polaires 28 répartis sur la périphérie extérieure du premier stator 14, et

- un deuxième actionneur 11, le deuxième actionneur 11 comprenant un deuxième moteur électrique 12, le deuxième moteur électrique 12 comprenant un deuxième rotor 13 et un deuxième stator 14 positionnés de manière coaxiale autour d'un axe de rotation X, le deuxième rotor 13 comprenant un deuxième corps de rotor 15 muni d'éléments magnétiques 16 entourés par le deuxième stator 14, le deuxième stator 14 étant formé par un noyau de stator 17 comprenant des éléments polaires 28 répartis sur la périphérie extérieure du deuxième stator 14,

- où les premier et deuxième stators 14 des premier et deuxième moteurs électriques 12 présentent un profil commun à usages multiples configuré pour coopérer au moins avec le premier rotor 13, de sorte à délivrer une première valeur de couple, et avec le deuxième rotor 13, de sorte à délivrer une deuxième valeur de couple,

- où la première valeur de couple est inférieure à la deuxième valeur de couple, et

- où les éléments polaires 28 présentent une largeur d'ouverture polaire angulaire A inférieure à la largeur angulaire α1 des éléments magnétiques 16 du premier rotor 13.

On va décrire à présent un procédé de fabrication d'un actionneur électromécanique conforme à un mode de réalisation de l'invention.

Le procédé d'assemblage comprend une étape d'assemblage d'un stator 14 avec au moins :

- soit un premier rotor 13, le stator 14 du moteur 12 présentant un profil commun à usages multiples coopérant avec le premier rotor 13,
- soit un deuxième rotor 13, le profil commun à usages multiples du stator 14 étant configuré pour coopérer avec le deuxième rotor 13,
- où les éléments polaires 28 présentent une largeur d'ouverture polaire angulaire A inférieure à la largeur angulaire α1 des éléments magnétiques 16 du premier rotor 13.

Ainsi, lors de la fabrication d'un moteur électrique 12 d'un actionneur 11, un stator 14 ayant un profil commun à usages multiples est assemblé avec soit un premier rotor 13 soit avec un deuxième rotor 13 suivant la valeur de couple que le moteur électrique 12 à produire doit délivrer.

Le fait d'utiliser un profil de stator 14 commun à usages multiples pour une gamme d'actionneurs 11 comprenant des moteurs électriques 12 pourvus de rotors différents et délivrant différentes valeurs de couple permet de réduire les coûts de développement et d'industrialisation des actionneurs 11, et en outre d'étendre une gamme d'actionneurs 11.

L'utilisation du même profil de stator 14 pour une gamme d'actionneurs 11 permet de répondre au besoin d'applications nécessitant des moteurs différents pouvant délivrer des valeurs de couple différentes, notamment à des applications de motorisation de volets ou de portes de taille et/ou de poids différents.

Bien entendu, de nombreuses modifications peuvent être apportées aux exemples de réalisation décrits précédemment sans sortir du cadre de l'invention.

**Revendications**

1. Actionneur électromécanique (11) comprenant un moteur électrique (12) à courant continu sans balais à commutation électronique, le moteur (12) comprenant un rotor (13) et un stator (14) positionnés de manière coaxiale autour d'un axe de rotation (X), dans lequel :

   a- le rotor (13) comprend un corps de rotor (15) muni d'éléments magnétiques (16) entourés par le stator (14), chaque élément magnétique (16) présentant une largeur angulaire définie comme l'angle au sommet d'un secteur angulaire d'aire minimale, centré sur l'axe de rotation (X) en coupe radiale du moteur électrique (12) et qui inclut cet élément magnétique (16),
   b- lesdits éléments magnétiques (16) du rotor (13) sont disposés sur la circonférence extérieure du corps du rotor (15) et ces éléments magnétiques (16) constituent des paires de pôles, ainsi qu'un aimant permanent,
   c- le stator (14) est formé par un noyau de stator (17) comprenant des éléments polaires (28) répartis sur la périphérie du stator (14), avec des bobinages (29) positionnés autour des éléments polaires (28),
   d- les éléments polaires (28) du stator (14) présentent une largeur d'ouverture polaire angulaire (A), définie comme l'angle au sommet d'un secteur angulaire centré sur l'axe de rotation (X) et délimité par deux droites passant respectivement par les deux extrémités d'une partie de cet élément qui définit un entrefer (25) séparant, radialement, par rapport à l'axe de rotation (X), l'aimant permanent formé par les éléments magnétiques (16) par rapport au stator (14), cet angle étant défini dans un plan radial à l'axe de rotation (X) et contenant l'élément polaire (28), laquelle ouverture polaire angulaire est inférieure à la largeur angulaire (α1) des éléments magnétiques (16) du rotor (13),
   e- le noyau de stator (17) est en matériau magnétisable,
   f- le stator (14) comprend, sur sa circonférence extérieure, une culasse (30) centrée sur l'axe de rotation (X) et qui permet la circulation d'un flux magnétique, et
   g- le stator (14) définit un espace interne (E) cylindrique à section circulaire, dans lequel le rotor (13) est positionné et à l'intérieur duquel le rotor (13) peut être en rotation,
   h- l'espace interne (E) cylindrique reçoit également au moins un palier (26, 27) de support en rotation d'un arbre de rotor (24),

   **caractérisé en ce que** :

i- la largeur d'ouverture polaire angulaire (A) des éléments polaires (28) du stator (14) est au moins deux fois plus petite que la largeur angulaire ($\alpha$1) des éléments magnétiques (16) du rotor (13),

j- le nombre de paires de pôles du rotor (13) est de deux ou quatre,

k- la largeur d'ouverture polaire angulaire (A) des éléments polaires (28) du stator (14) est comprise dans une plage s'étendant entre 20° et 40°,

l- le nombre d'éléments polaires (28) du stator (14) est de six, et

m- le noyau de stator (17) comprend des connecteurs (18) de court-circuit magnétique reliant deux éléments polaires (28) entre eux, les connecteurs (18) de court-circuit magnétique correspondant à des liaisons mécaniques entre deux éléments polaires (28) et canalisant une partie du flux magnétique généré par le moteur électrique (12) à l'intérieur du noyau de stator (17).

2. Actionneur électromécanique (11) selon la revendication 1, **caractérisé en ce que** le stator (14) présente un profil commun à usages multiples et une disposition des éléments polaires (28) configurée pour coopérer avec différents types de rotor (13), le profil de stator (14) correspondant à la section du stator (14) orthogonale à l'axe de rotation (X) du stator (14).

3. Actionneur électromécanique (11) selon la revendication 2, **caractérisé en ce que** :

- le profil du stator (14) est configuré pour coopérer au moins avec un premier rotor (13) comprenant un premier nombre de paires de pôles et avec un deuxième rotor (13) comprenant un deuxième nombre de paires de pôles,
- où le premier nombre de paires de pôles du premier rotor (13) est de deux et le deuxième nombre de paires de pôles du deuxième rotor (13) est de quatre, et
- où la largeur d'ouverture polaire angulaire (A) des éléments polaires (28) est configurée pour coopérer avec le premier rotor (13) et le deuxième rotor (13).

4. Installation domotique de fermeture ou de protection solaire comprenant un écran (2) enroulable sur un tube d'enroulement (4) entraîné en rotation par un actionneur électromécanique (11), **caractérisée en ce que** l'actionneur est selon l'une des revendications précédentes.

**Patentansprüche**

1. Elektromechanisches Stellglied (11), umfassend einen mit Gleichstrom betriebenen bürstenlosen Elektromotor (12) mit elektronischer Kommutierung, wobei der Motor (12) einen Rotor (13) und einen Stator (14) umfasst, wobei der Rotor (13) und der Stator (14) koaxial um eine Rotationsachse (X) angeordnet sind, wobei:

a- der Rotor (13) einen mit von dem Stator (14) umgebenen magnetischen Elementen (16) versehenen Rotorkörper (15) umfasst, wobei jedes magnetische Element (16) eine Winkelbreite aufweist, die als Scheitelwinkel eines Winkelsektors mit einer minimalen Fläche definiert ist, welcher auf die Rotationsachse (X) im Radialschnitt des Elektromotors (12) zentriert ist und das magnetische Element (16) einschließt,

b- die magnetischen Elemente (16) des Rotors (13) am Außenumfang des Rotorkörpers (15) angeordnet sind und die magnetischen Elemente (16) Polpaare sowie einen Permanentmagneten bilden,

c- der Stator (14) durch einen Statorkern (17) gebildet ist, der am Umfang des Stators (14) verteilte Polelemente (28) umfasst, wobei die Polelemente (28) von Wicklungen (29) umgeben sind,

d- die Polelemente (28) des Stators (14) eine polare Winkelöffnungsbreite (A) aufweisen, die als Scheitelwinkel eines Winkelsektors definiert ist, der auf die Rotationsachse (X) zentriert ist und durch zwei Geraden abgegrenzt ist, die jeweils durch die zwei Enden eines Abschnitts des Elements verlaufen, wobei das Element einen Luftspalt (25) definiert, der radial bezogen auf die Rotationsachse (X) den durch die magnetischen Elemente (16) gebildeten Permanentmagneten gegenüber dem Stator (14) trennt, wobei der Winkel in einer Ebene radial zur Rotationsachse (X) definiert ist und das Polelement (28) umfasst, wobei die polare Winkelöffnung kleiner ist als die Winkelbreite ($\alpha$1) der magnetischen Elemente (16) des Rotors (13),

e- der Statorkern (17) aus magnetisierbarem Material ist,

f- der Stator (14) an seinem Außenumfang ein um die Rotationsachse (X) zentriertes Joch (30) umfasst, welches die Zirkulation eines magnetischen Flusses ermöglicht, und

g- der Stator (14) einen zylindrischen Innenraum (E) mit einem kreisförmigen Schnitt definiert, in welchem der Rotor (13) angeordnet ist und in dessen Innerem der Rotor (13) drehbar ist,

h- der zylindrische Innenraum (E) außerdem mindestens ein Lager (26, 27) zur drehbaren Lagerung einer Rotorwelle (24) aufnimmt, **dadurch gekennzeichnet, dass**

EP 2 908 412 B1

i- die polare Winkelöffnungsbreite (A) der Polelemente (28) des Stators (14) mindestens um das Zweifache kleiner als die Winkelbreite ($\alpha$1) der magnetischen Elemente (16) des Rotors (13) ist,

j- die Anzahl der Polpaare des Rotors (13) zwei oder vier ist,

k- die polare Winkelöffnungsbreite (A) der Polelemente (28) des Stators (14) in einem Bereich von 20° bis 40° liegt,

1- die Anzahl der Polelemente (28) des Stators (14) sechs ist, und

m- der Statorkern (17) magnetische Kurzschluss-Verbinder (18) umfasst, die zwei Polelemente (28) miteinander verbinden, wobei die magnetischen Kurzschluss-Verbinder (18) mechanischen Verbindungen zwischen zwei Polelementen (28) entsprechen und einen Teil des durch den Elektromotor (12) erzeugten magnetischen Flusses ins Innere des Statorkerns (17) leiten.

2. Elektromechanisches Stellglied (11) nach Anspruch 1, **dadurch gekennzeichnet, dass** der Stator (14) ein gemeinsames Profil für eine Vielzahl von Verwendungszwecken und eine zur Zusammenwirkung mit verschiedenen Arten von Rotoren (13) ausgebildete Anordnung der Polelemente (28) aufweist, wobei das Profil des Stators (14) dem Schnitt des Stators (14) rechtwinklig zur Rotationsachse (X) des Stators (14) entspricht.

3. Elektromechanisches Stellglied (11) nach Anspruch 2, **dadurch gekennzeichnet, dass**

- das Profil des Stators (14) dazu ausgebildet ist, zumindest mit einem eine erste Anzahl von Polpaaren umfassenden ersten Rotor (13) und mit einem eine zweite Anzahl von Polpaaren umfassenden zweiten Rotor (13) zusammenzuwirken,
- wobei die erste Anzahl von Polpaaren des ersten Rotors (13) zwei ist und die zweite Anzahl von Polpaaren des zweiten Rotors (13) vier ist, und
- wobei die polare winkelförmige Öffnungsbreite (A) der Polelemente (28) dazu ausgebildet ist, mit dem ersten Rotor (13) und dem zweiten Rotor (13) zusammenzuwirken.

4. Heimtechnikanlage zum Schließen oder zum Sonnenschutz, umfassend einen auf eine Wickelwelle (4) aufwickelbaren Behang (2), welcher durch ein elektromechanisches Stellglied (11) in Rotation versetzbar ist, **dadurch gekennzeichnet, dass** das Stellglied nach einem der vorangehenden Ansprüche ausgebildet ist.

**Claims**

1. An electromechanical actuator (11) comprising a brushless DC electric motor (12) with electronic switching, the motor (12) comprising a rotor (13) and a stator (14) that are positioned coaxially around an axis of rotation (X), in which:

a- the rotor (13) comprises a rotor body (15) provided with magnetic elements (16) surrounded by the stator (14), each magnetic element (16) having an angular width defined as the apical angle of an angular sector of minimum area, centered on the axis of rotation (X) in radial cross-section the electric motor (12) and which includes this magnetic element (16),

b- said magnetic elements (16) of the rotor (13) are located on the outer circumference of the stator body (15) and these magnetic elements (16) making up pairs of poles, and a permanent magnet,

c- the stator (14) is formed by a stator core (17) including polar elements (28) distributed on the periphery of the stator (14), with windings (29) located around the polar elements (28),

d- the polar elements (28) of the stator (14) have an angular polar opening width (A), defined as the apical angle of an angular sector centered on the axis of rotation (X) and delimited by two straight lines respectively passing through the two ends of a part of that element that defines an air gap (25) separating, radially, with respect to the rotation axis (X), the permanent magnet made up by the magnetic elements (16) from the stator (14), this angle being defined in a plane radial to the rotation axis (X) and containing the polar element (28), said angular polar opening being smaller than the angular width ($\alpha$1) of the magnetic elements (16) of the rotor (13),

e- the stator core (17) is in a magnetizable material,

f- the stator (14) comprises, on its outer circumference, a cylinder head (30) centered on the axis of rotation (X) and which allows the flow of the magnetic flux, and

g- the stator (14) defines a cylindrical inner space (E), with a circular section, in which the rotor (13) is located and inside which the rotor (13) can rotate,

h- the cylindrical inner space (E) also receives at least one bearing (26, 27) for providing rotational support for a rotor shaft (24),

**characterized in that**:

i- the angular polar opening width (A) of the polar elements (28) of the stator (14) is at least two times smaller than the angular width ($\alpha$1) of the magnetic elements (16) of the rotor (13),

j- the number of pairs of poles of the rotor (13) is two or four,

k- the angular polar opening width (A) of the polar elements (28) of the stator (14) is comprised in a range between 20° and 40°,

l- the number of polar elements (28) of the stator (14) is six, and

m- the stator core (17) comprises magnetic short circuit connectors (18) connecting two polar elements (28) to each other, the magnetic short circuit connectors (18) corresponding to mechanical links between two polar elements (28) and channeling part of the magnetic flux generated by the electric motor (12) inside the stator core (17).

2. The electromechanical actuator (11) according to claim 1, **characterized in that** that the stator (14) has a shared multiuse profile and an arrangement of the polar elements (28) configured to cooperate with different types of rotor (13), the profile of the stator (14) corresponding to the section of the stator (14) orthogonal to the axis of rotation (X) of the stator (14).

3. The electromechanical actuator (11) according to claim 2, **characterized in that**:

- the profile of the stator (14) is configured to cooperate at least with a first rotor (13) comprising a first number of pairs of poles and with a second rotor (13) comprising a second number of pairs of poles,

- where first number of pairs of poles of the first rotor (13) is two and the second number of pairs of poles of the second rotor (13) is four, and

- where the angular polar opening width (A) of the polar elements (28) is configured to cooperate with the first rotor (13) and the second rotor (13).

4. A home automation facility for closing or providing sun protection that comprises a screen (2) able to be wound on a winding tube (4) rotated by an electromechanical actuator (11), **characterized in that** the actuator is according to one of the preceding claims.

FIG. 1

FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090127960 A
- US 20060273684 A
- US 6531794 B
- JP 2007174790 A
- US 20110148239 A